(19) **Europäisches Patentamt / European Patent Office / Office européen des brevets**

(11) **EP 2 781 249 A1**

(12) **EUROPEAN PATENT APPLICATION**

(43) Date of publication:
24.09.2014 Bulletin 2014/39

(51) Int Cl.:
**B01D 53/04** (2006.01)

(21) Application number: 14158056.3

(22) Date of filing: 06.03.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 21.03.2013 JP 2013058076

(71) Applicant: **Hitachi, Ltd.**
**Tokyo 100-8280 (JP)**

(72) Inventors:
• **Sato, Hiroki**
 **Tokyo, 100-8280 (JP)**
• **Yoshikawa, Kohei**
 **Tokyo, 100-8280 (JP)**
• **Kaneeda, Masato**
 **Tokyo, 100-8280 (JP)**

(74) Representative: **Beetz & Partner**
**Patentanwälte**
**Steinsdorfstraße 10**
**80538 München (DE)**

(54) **Carbon dioxide capture equipment**

(57)    A carbon dioxide capture equipment provided with a carbon dioxide capture tower including a carbon dioxide sorbent, comprising: a carbon dioxide-containing gas channel to supply a carbon dioxide-containing gas to a carbon dioxide capture tower packed with a carbon dioxide sorbent; a carbon dioxide-depleted gas capture channel to capture a gas depleted of carbon dioxide; a regeneration gas channel to introduce a regeneration gas; a carbon dioxide and regeneration gas capture channel to capture a gas containing carbon dioxide and the regeneration gas; a carbon dioxide-regeneration gas separation unit to separate the captured carbon dioxide and the captured regeneration gas from each other; a heat medium channel to heat the carbon dioxide sorbent; a detector to detect temperature or carbon dioxide concentration in the carbon dioxide capture tower; and a control device to control a flow of the heat medium and the regeneration gas.

## FIG. 1A

## Description

Technical Field

The present invention relates to a carbon dioxide capture equipment using a carbon dioxide sorbent.

Background Art

In order to prevent global warming, reduction in emission of carbon dioxide which has a great influence as a greenhouse gas has been demanded. As a specific method for preventing emission of carbon dioxide, there is known a technique for separating and capturing carbon dioxide using an absorbent liquid, an adsorbent material, etc.

As one example, there is a technique for adsorbing and separating a gas disclosed in JP-A-6-91127, etc.

In this technique disclosed in JP-A-6(1994)-91127, in order to adsorb and separate a certain specific component in a sample gas, first, the specific component is adsorbed on an adsorbent placed in an adsorption tower, and thereafter, the specific component is desorbed from the adsorbent by heating and aerating the adsorption tower having a given amount of the specific component adsorbed thereon, thereby regenerating the adsorbent.

Here, in order to prevent a decrease in the gas purity of the captured specific component, it is desired to use steam which can be easily subjected to gas-liquid separation at normal temperature and normal pressure as a gas to be allowed to flow through the adsorption tower.

Further, in a technique disclosed in JP-A-2006-298707, in order to prevent the temperature of steam from decreasing to the condensation temperature or lower, the temperature of a carbon dioxide absorbent material when absorbing carbon dioxide is set to 500 to 900°C, and when regenerating the carbon dioxide absorbent material, the carbon dioxide absorbent material is heated while supplying superheated steam at 800 to 1000°C to the carbon dioxide absorbent material, whereby the carbon dioxide absorbent material is regenerated.

Citation List

Patent Literature

{Patent Literature 1} Japanese Patent Laid-open No. JP-A 6(1994)-91127
{Patent Literature 2} Japanese Patent Laid-open No. JP-A-2006-298707

Summary of the Invention

Technical Problem

However, the technique disclosed in JP-A-6 (1994)-91127 has a problem that in the case where the temperature of the carbon dioxide sorbent is lower than the steam temperature, condensation of steam occurs on the surface of the carbon dioxide sorbent due to the flow of steam therethrough, etc.

As a method for solving this problem, for example, according to the technique disclosed in JP-A-2006-298707, in order to prevent the temperature of steam from decreasing to the condensation temperature or lower, the temperature of the carbon dioxide absorbent material when absorbing carbon dioxide is set to 500 to 900°C, and when regenerating the carbon dioxide absorbent material, the carbon dioxide absorbent material is heated while supplying superheated steam at 800 to 1000°C to the carbon dioxide absorbent material, whereby the carbon dioxide absorbent material is regenerated.

However, the technique disclosed in JP-A-2006-298707 has a problem that while regenerating the carbon dioxide absorbent material, steam is kept flowing through the carbon dioxide absorbent material, and therefore, a large heat amount for condensation is lost when carbon dioxide and steam are subjected to gas-liquid separation after capture, and thus an operating cost is increased.

An object of the present invention is to provide a carbon dioxide capture equipment, with which the using amount of a regeneration gas to be allowed to flow in a carbon dioxide capture tower in a regeneration step of a carbon dioxide sorbent is reduced, and also the regeneration ratio of the carbon dioxide sorbent is improved.

Solution to Problem

A carbon dioxide capture equipment according to the present invention is characterized in that in a carbon dioxide capture equipment provided with a carbon dioxide capture tower including a carbon dioxide sorbent, comprising: a carbon dioxide-containing gas channel to supply a carbon dioxide-containing gas to the carbon dioxide sorbent included in the carbon dioxide capture tower; a carbon dioxide-depleted gas capture channel to capture a gas depleted of carbon dioxide from the carbon dioxide capture tower; a regeneration gas channel to introduce a regeneration gas into the carbon dioxide sorbent included in the carbon dioxide capture tower; a carbon dioxide and regeneration gas capture channel to capture a gas containing carbon dioxide and the regeneration gas from the carbon dioxide capture tower; a carbon dioxide-regeneration gas separation unit to separate carbon dioxide and the regeneration gas by cooling the carbon dioxide and the regeneration gas captured from the carbon dioxide capture tower through the carbon dioxide and regeneration gas capture channel; a carbon dioxide capture channel and a liquefied regeneration gas capture channel, each of which is connected to the carbon dioxide-regeneration gas separation unit, and to capture the carbon dioxide and the liquefied regeneration gas separated by the carbon dioxide-regeneration gas separation unit from the carbon dioxide-regeneration gas separation unit, respectively; a heat medium channel to heat the carbon dioxide sorbent included in the carbon dioxide capture tower by suppying a heat medium to the carbon dioxide capture tower in a non-contact manner with the carbon dioxide sorbent; a temperature detector to measure a temperature in the carbon dioxide capture tower, or a carbon dioxide concentration detector to detect a carbon dioxide concentration in the carbon dioxide capture tower; and a control device to control a flow amount of the heat source to be supplied to the carbon dioxide capture tower through the heat medium channel based on the temperature or the carbon dioxide concentration in the carbon dioxide capture tower detected by the temperature detector or the carbon dioxide concentration detector, and also control a flow amount of the carbon dioxide-containing gas to be supplied to the carbon dioxide capture tower through the carbon dioxide-containing gas channel and a flow amount of the carbon dioxide-depleted gas to be captured from the carbon dioxide capture tower through the carbon dioxide-depleted gas capture channel in a regeneration step, in which the carbon dioxide sorbent included in the carbon dioxide capture tower is regenerated.

Further, a carbon dioxide capture equipment according to another aspect of the present invention is characterized in that in a carbon dioxide capture equipment provided with a carbon dioxide capture tower including a carbon dioxide sorbent, comprising: a carbon dioxide-containing gas channel to supply a carbon dioxide-containing gas to the carbon dioxide sorbent included in the carbon dioxide capture tower; a carbon dioxide-depleted gas capture channel to capture a gas depleted of carbon dioxide from the carbon dioxide capture tower; a regeneration gas channel to introduce a regeneration gas into the carbon dioxide sorbent included in the carbon dioxide capture tower; a carbon dioxide and regeneration gas capture channel to capture a gas containing carbon dioxide and the regeneration gas from the carbon dioxide capture tower; a carbon dioxide-regeneration gas separation unit to separate carbon dioxide and the regeneration gas by cooling the carbon dioxide and the regeneration gas captured from the carbon dioxide capture tower through the carbon dioxide and regeneration gas capture channel; a carbon dioxide capture channel and a liquefied regeneration gas capture channel, each of which is connected to the carbon dioxide-regeneration gas separation unit, and to capture the carbon dioxide and the liquefied regeneration gas separated by the carbon dioxide-regeneration gas separation unit from the carbon dioxide-regeneration gas separation unit, respectively; a heat medium channel to heat the carbon dioxide sorbent included in the carbon dioxide capture tower by supplying a heat medium to the carbon dioxide capture tower in a non-contact manner with the carbon dioxide sorbent; a cooling medium channel to cool the carbon dioxide sorbent included in the carbon dioxide capture tower by supplying a cooling medium to the carbon dioxide capture tower in a non-contact manner with the carbon dioxide sorbent; a carbon dioxide concentration detector to detect a carbon dioxide concentration in the carbon dioxide capture tower; a cooling medium temperature detector to measure a temperature of the cooling medium flowing down through the cooling medium channel; a control device to control a flow amount of the carbon dioxide-containing gas to be supplied to the carbon dioxide capture tower through the carbon dioxide-containing gas channel and a flow amount of the carbon dioxide-depleted gas to be captured from the carbon dioxide capture tower through the carbon dioxide-depleted gas capture channel based on the carbon dioxide concentration in the carbon dioxide capture tower detected by the carbon dioxide concentration detector, and also control a flow amount of the heat source to be supplied to the carbon dioxide capture tower through the heat medium channel based on the carbon dioxide concentration in the carbon dioxide capture tower detected by the carbon dioxide concentration detector when regenerating the carbon dioxide sorbent included in the carbon dioxide capture tower; and a cooling medium temperature controller to control a flow amount of the cooling medium to be supplied to the carbon dioxide capture tower through the cooling medium channel based on the temperature of the cooling medium flowing down through the cooling medium channel detected by the cooling medium temperature detector in a cooling step after completing a regeneration step, in which the carbon dioxide sorbent included in the carbon dioxide capture tower is regenerated.

Further, a carbon dioxide capture equipment according to still another aspect of the present invention is characterized in that in a carbon dioxide capture equipment provided with a carbon dioxide capture tower including a carbon dioxide sorbent, comprising: a carbon dioxide-containing gas channel to supply a carbon dioxide-containing gas to the carbon dioxide sorbent included in the carbon dioxide capture tower; a carbon dioxide-depleted gas capture channel to capture a gas depleted of carbon dioxide from the carbon dioxide capture tower; a regeneration gas channel to introduce a regeneration gas into the carbon dioxide sorbent included in the carbon dioxide capture tower; a carbon dioxide and regeneration gas capture channel to capture a gas containing carbon dioxide and the regeneration gas from the carbon dioxide capture tower; a carbon dioxide-regeneration gas separation unit to separate carbon dioxide and the regeneration gas by cooling the carbon dioxide and the regeneration gas captured from the carbon dioxide capture tower through the carbon dioxide and regeneration gas capture channel; a carbon dioxide capture channel and a liquefied regeneration gas capture channel, each of which is connected to the carbon dioxide-regeneration gas separation unit, and to capture the carbon dioxide and the liquefied regeneration gas separated by the carbon dioxide-regeneration gas separation unit from the carbon dioxide-regeneration gas separation unit, respectively; a heat medium channel to heat the carbon dioxide sorbent included in the carbon dioxide capture tower by suppying a heat medium to the carbon dioxide capture tower in a non-contact manner with the carbon dioxide sorbent; a timer for setting a time from when the supply of the heat medium to the carbon dioxide capture tower is started until when the temperature of the carbon dioxide sorbent is increased by heating to a predetermined temperature, and a control device control a flow amount of the heat source to be supplied to the carbon dioxide capture tower through the heat medium channel based on a command signal of the completion of the heating of the carbon dioxide sorbent output from the timer, and also control a flow amount of the carbon dioxide-containing gas to be supplied to the carbon dioxide capture tower through the carbon dioxide-containing gas channel and a flow amount of the carbon dioxide-depleted gas to be captured from the carbon dioxide capture tower through the carbon dioxide-depleted gas capture channel in a regeneration step, in which the carbon dioxide sorbent included in the carbon dioxide capture tower is regenerated.

Advantageous Effects of Invention

According to the present invention, a carbon dioxide capture equipment, with which the using amount of a regeneration gas to be allowed to flow in a carbon dioxide capture tower in a regeneration step of a carbon dioxide sorbent is reduced, and also the improving regeneration ratio of the carbon dioxide sorbent can be realized.

Brief Description of the Drawings

Fig. 1A is an overall block diagram of a carbon dioxide capture equipment showing a heating process which is a regeneration step of a carbon dioxide sorbent in a carbon dioxide capture equipment according to a first embodiment of the present invention.
Fig. 1B is an overall block diagram of a carbon dioxide capture equipment showing a flowing process of a regeneration gas which is a regeneration step of a carbon dioxide sorbent in the carbon dioxide capture equipment according to the first embodiment of the present invention.
Fig. 2A is an overall block diagram of a carbon dioxide capture equipment showing regeneration and cooling steps of a carbon dioxide sorbent in a carbon dioxide capture equipment according to a second embodiment of the present invention.
Fig. 2B is an overall block diagram of a carbon dioxide capture equipment showing the regeneration and cooling steps of the carbon dioxide sorbent in the carbon dioxide capture equipment according to the second embodiment of the present invention.
Fig. 2C is an overall block diagram of a carbon dioxide capture equipment showing the regeneration and cooling steps of the carbon dioxide sorbent in the carbon dioxide capture equipment according to the second embodiment of the present invention.
Fig. 3 is a schematic block diagram showing a carbon dioxide sorbent regeneration test device for a carbon dioxide sorbent used in Comparative Examples 1 and 2 and an embodiment of the present invention.
Fig. 4 is a comparison chart showing the regeneration ratio of a carbon dioxide sorbent according to a test using the carbon dioxide sorbent regeneration test device for the carbon dioxide sorbent used in Comparative Examples 1 and 2 and the embodiment of the present invention.

Description of the Preferred Embodiments

Hereinafter, a carbon dioxide capture equipment provided with a carbon dioxide capture tower according to an embodiment of the present invention will be described with reference to the accompanying drawings.

First Embodiment

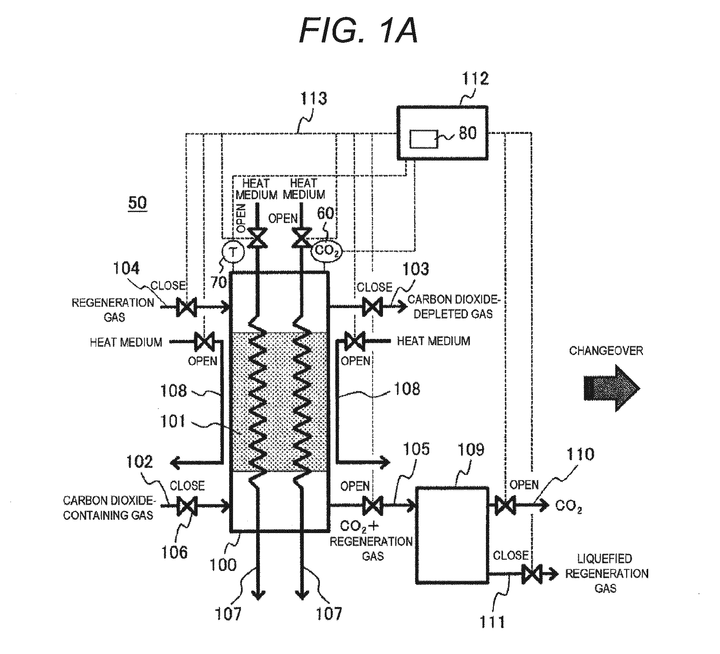

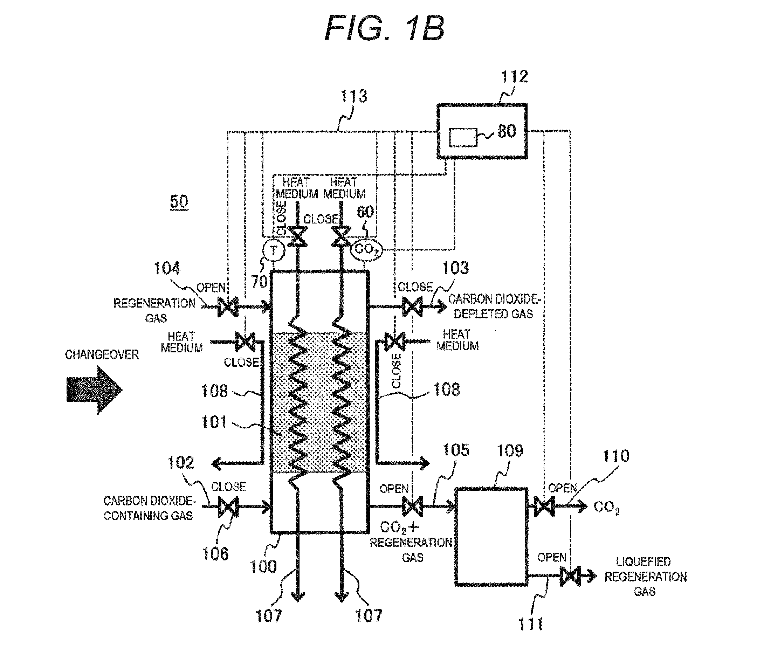

A carbon dioxide capture equipment provided with a carbon dioxide capture tower according to a first embodiment of the present invention will be described with reference to Figs. 1A and 1B.

Fig. 1A is an overall block diagram of a carbon dioxide capture equipment showing a heating process which is a regeneration step of a carbon dioxide sorbent in a carbon dioxide capture equipment 50 provided with a carbon dioxide capture tower 100 according to the first embodiment of the present invention.

In the carbon dioxide capture equipment 50 provided with the carbon dioxide capture tower 100 according to this embodiment shown in Fig. 1A, the carbon dioxide capture tower 100 includes a carbon dioxide sorbent 101 which selectively sorbs carbon dioxide from a carbon dioxide-containing gas.

In order to capture carbon dioxide in the carbon dioxide-containing gas, it is necessary to sequentially perform the following three steps: (1) a "sorption step", in which carbon dioxide is sorbed by the carbon dioxide sorbent 101 included in the carbon dioxide capture tower 100, (2) a "regeneration step" of the carbon dioxide sorbent 101, in which carbon dioxide sorbed by the carbon dioxide sorbent 101 is desorbed by heating so that the carbon dioxide sorbent 101 is made usable again in the sorption step, and (3) a "cooling step", in which the heated carbon dioxide sorbent 101 is cooled to a temperature equal to or slightly higher than the temperature of the carbon dioxide-containing gas.

In the carbon dioxide capture equipment, at least three carbon dioxide capture towers 100 are disposed, and by assigning the above-described three steps to the three carbon dioxide capture towers 100, respectively, carbon dioxide can be continuously captured from a carbon dioxide-containing gas by the carbon dioxide capture equipment.

In the carbon dioxide capture equipment 50 provided with the carbon dioxide capture tower 100 according to this embodiment, when carbon dioxide in a carbon dioxide-containing gas is sorbed, the carbon dioxide-containing gas is supplied to the carbon dioxide capture tower 100 through a carbon dioxide-containing gas channel 102, carbon dioxide in the carbon dioxide-containing gas supplied to the carbon dioxide capture tower 100 is selectively sorbed by the carbon dioxide sorbent 101 included in the carbon dioxide capture tower 100.

Then, a gas depleted of carbon dioxide by selectively sorbing carbon dioxide by the carbon dioxide sorbent 101 is discharged to the outside from the carbon dioxide capture tower 100 through a carbon dioxide-depleted gas capture channel 103.

In the carbon dioxide capture equipment 50 according to this embodiment, a control device 112 which controls opening and closing of valves is disposed, and when the concentration of carbon dioxide in the gas in the carbon dioxide-depleted gas capture channel 103 through which the gas depleted of carbon dioxide is discharged from the carbon dioxide capture tower 100 has reached a predetermined value, or a predetermined time has passed since the carbon dioxide-containing gas is allowed to flow in the carbon dioxide capture tower 100 through the carbon dioxide-containing gas channel 102, a valve disposed in the carbon dioxide-containing gas channel 102 and a valve disposed in the carbon dioxide-depleted gas capture channel 103 are closed by the control of the control device 112 so that the flow through the carbon dioxide-containing gas channel 102 and the carbon dioxide-depleted gas capture channel 103 is closed.

Next, the regeneration step of the carbon dioxide sorbent 101 included in the carbon dioxide capture tower 100 will be described. Fig. 1A shows the opened and closed states of valves for supplying a heat medium to the carbon dioxide capture tower 100 operated by the control device 112 in a process of heating the carbon dioxide sorbent 101 for regenerating the carbon dioxide sorbent 101 included in the carbon dioxide capture tower 100.

As shown in Fig. 1A, in order to desorb and then capture carbon dioxide selectively sorbed from the carbon dioxide-containing gas by the carbon dioxide sorbent 101 included in the carbon dioxide capture tower 100 from the carbon dioxide sorbent 101, a valve disposed in a carbon dioxide and regeneration gas capture channel 105 through which carbon dioxide and a regeneration gas are supplied to a regeneration gas condenser 109 from the carbon dioxide capture tower 100, and a valve disposed in a carbon dioxide capture channel 110 through which carbon dioxide is discharged to the outside from the regeneration gas condenser 109 are opened, and also a valve disposed in a heat medium channel 107 passing through the inside of the carbon dioxide capture tower 100 and a valve disposed in a heat medium channel 108 passing through the outside of the carbon dioxide capture tower 100 are opened to allow the heat medium to flow down through each of the heat medium channels 107 and 108 by the control operation of the control device 112, whereby the carbon dioxide sorbent 101 included in the carbon dioxide capture tower 100 is heated.

Carbon dioxide desorbed from the carbon dioxide sorbent 101 by this heating of the carbon dioxide sorbent 101 is introduced from the carbon dioxide capture tower 100 into the regeneration gas condenser 109 through the carbon dioxide and regeneration gas capture channel 105, and further discharged to the outside from the regeneration gas condenser 109 through the carbon dioxide capture channel 110, and then, captured by a capture device (not shown) on the downstream side of the regeneration gas condenser 109 by the operation of opening and closing the respective valves described above by the control device 112.

Incidentally, the heat medium channel 108 passing through the outside of the carbon dioxide capture tower 100 may be arranged outside the carbon dioxide capture tower 100 or may be arranged inside a wall of the carbon dioxide capture tower 100.

Fig. 1B shows the opened and closed states of valves for supplying a regeneration gas to the carbon dioxide capture tower 100 operated by the control device 112 in a process of regenerating the carbon dioxide sorbent 101 heated for regenerating the carbon dioxide sorbent 101 included in the carbon dioxide capture tower 100.

As shown in Fig. 1B, a timer 80 is provided in the control device 112 and is set such that a predetermined set time from when the heating of the carbon dioxide sorbent 101 is started for heating the carbon dioxide sorbent 101 included in the carbon dioxide capture tower 100 by allowing the heat medium to flow through the heat medium channels 107 and 108 until when the temperature of the carbon dioxide sorbent 101 reaches a predetermined temperature can be counted.

After a predetermined set time set by the timer 80 has passed since the heating of the carbon dioxide sorbent 101 included in the carbon dioxide capture tower 100 is started by allowing the heat medium to flow down through the heat medium channels 107 and 108 arranged inside and outside, respectively, the carbon dioxide capture tower 100 in the heating step, the carbon dioxide sorbent 101 is regenerated by supplying the regeneration gas to the carbon dioxide capture tower 100 from the outside through the regeneration gas channel 104 and allowing the regeneration gas to flow through the carbon dioxide capture tower 100 by the operation of opening and closing the valves by the control device 112 in the regeneration step.

In this regeneration step, the flow of the heat medium through the heat medium channel 107 passing through the inside of the carbon dioxide capture tower 100 and the heat medium channel 108 passing through the outside of the carbon dioxide capture tower 100 may be closed or may not be closed.

Fig. 1B shows the opened and closed states of valves for supplying and discharging a fluid to and from the carbon dioxide capture tower 100 provided in the carbon dioxide capture equipment 50 in the regeneration step in which the flow of the heat medium down through the heat medium channels 107 and 108, which are arranged inside and outside, respectively, the carbon dioxide capture tower 100, is closed, and also the flow of the regeneration gas in the inside of the carbon dioxide capture tower 100 through the regeneration gas channel 104 is started by the operation of opening and closing the valves by the control device 112.

By bringing the valves to an opened or closed state shown in Fig. 1B through the control operation by the control device 112, the partial pressure of carbon dioxide around the carbon dioxide sorbent 101 included in the carbon dioxide capture tower 100 is decreased to promote the desorption of carbon dioxide to be desorbed from the carbon dioxide sorbent 101, whereby the regeneration ratio of the carbon dioxide sorbent 101 is improved.

The conditions for changing the heating step in which the heat medium is allowed to flow down through the heat medium channels 107 and 108 arranged inside and outside, respectively, the carbon dioxide capture tower 100 to heat the carbon dioxide sorbent 101 included in the carbon dioxide capture tower 100 to the regeneration step in which the regeneration gas is supplied to the carbon dioxide capture tower 100 through the regeneration gas channel 104 to regenerate the carbon dioxide sorbent 101 may be as follows: calculation and determination are made by the control device 112 based on the temperature of the carbon dioxide sorbent 101 in the carbon dioxide capture tower 100 detected by a thermometer 70 disposed in the carbon dioxide capture tower 100, and the operation of opening and closing the valves is performed by the control of the control device 112 to change the step; or an empirical time until when the temperature of the carbon dioxide sorbent 101 included in the carbon dioxide capture tower 100 reaches a set temperature by allowing the heat medium to flow down through the heat medium channels 107 and 108 to heat the carbon dioxide sorbent 101 is set in the timer 80 provided in the control device 112 in advance, and on the basis of the set time until when the temperature of the carbon dioxide sorbent 101 reaches a set temperature by heating output from this timer 80, the operation of opening and closing the valves is performed by the control device 112 to change the step.

Further, the step may be changed as follows. The flow amount of the carbon dioxide gas, which is the flow amount of the outlet gas desorbed from the carbon dioxide sorbent 101 is measured, and a determination is made by the control device 112 based on the measured flow amount of the gas. When the flow amount of the gas is decreased to a set amount or less, the operation of opening and closing the valves is performed by the control device 112 to change the step.

Here, the regeneration gas to be supplied to the carbon dioxide capture tower 100 through the regeneration gas channel 104 for regenerating the carbon dioxide sorbent 101 is preferably a regeneration gas which flows in the regeneration gas condenser 109 from the carbon dioxide capture tower 100 through the carbon dioxide and regeneration gas capture channel 105 and is easily condensed by this regeneration gas condenser 109.

It is because in the regeneration gas condenser 109, carbon dioxide is separated as a gas and the regeneration gas is separated as a liquid from the gas flowing in the regeneration gas condenser 109 from the carbon dioxide capture tower 100, and carbon dioxide and the regeneration gas are captured separately.

In this manner, as the regeneration gas to be supplied to the carbon dioxide capture tower 100 through the regeneration gas channel 104, for example, steam or an organic solvent such as an alcohol may be used as long as it is a gas which is condensed in a temperature range of 50 to 150°C in an atmospheric pressure.

From the viewpoint of poisoning of the carbon dioxide sorbent 101, more preferred examples of the regeneration gas to be supplied to the carbon dioxide capture tower 100 include a low-molecular weight gas having a molecular weight of 50 or less such as steam.

Incidentally, the regeneration gas which is condensed at a temperature lower than 50°C requires additional energy for condensing the regeneration gas by the regeneration gas condenser 109, and when a gas which is condensed at a temperature higher than 150°C is used, the regeneration gas may be condensed on the surface of the carbon dioxide sorbent 101 at the time of sorbing carbon dioxide.

It was found that the method for capturing carbon dioxide when steam is used as the regeneration gas has the following problem: in the case where steam is allowed to flow through the carbon dioxide sorbent 101 from the beginning in the regeneration step, since the temperature of the carbon dioxide sorbent 101 is generally lower than the temperature of steam, steam is condensed on the surface of the carbon dioxide sorbent 101 to inhibit the desorption of carbon dioxide from the carbon dioxide sorbent 101.

That is, when steam is condensed on the surface of the carbon dioxide sorbent 101 to inhibit the desorption of carbon dioxide from the carbon dioxide sorbent 101, the regeneration ratio of the carbon dioxide sorbent 101 is decreased. Therefore, the present inventors made intensive studies, and as a result, they succeeded in improving the desorption amount of carbon dioxide from the carbon dioxide sorbent 101 as compared with the case where only steam is allowed to flow through the carbon dioxide sorbent 101 from the beginning by allowing steam to flow through the carbon dioxide sorbent 101 after heating the carbon dioxide sorbent 101 in advance to a temperature equal to or higher than the temperature of steam so that the condensation of steam on the surface of the carbon dioxide sorbent 101 is prevented. That is, they succeeded in improving the regeneration ratio of the carbon dioxide sorbent 101.

Further, the following results were also obtained: in the case where steam is allowed to flow after heating the carbon dioxide sorbent 101 in advance to a temperature equal to or higher than the temperature of steam, the desorption amount of carbon dioxide desorbed from the carbon dioxide sorbent 101 is larger than the desorption amount of carbon dioxide desorbed only by heating the carbon dioxide sorbent 101 without allowing the regeneration gas to flow therethrough. This is attributed to the reduction in the partial pressure of carbon dioxide around the carbon dioxide sorbent 101.

On the other hand, the carbon dioxide capture equipment according to this embodiment has an advantage in that by heating the carbon dioxide sorbent 101 in advance, not superheated steam which requires a high temperature heat source, but saturated steam generated by a relatively low temperature heat source can be used.

This difference reflects energy necessary for capturing carbon dioxide. Further, since steam is allowed to flow through the carbon dioxide sorbent 101 after the carbon dioxide sorbent 101 is heated, the flow amount of steam through the carbon dioxide sorbent 101 can be reduced.

The reduction in the flow amount of steam leads to the reduction in the heat amount for condensing steam in the regeneration gas condenser 109, and therefore also has an advantage in that the operation cost is reduced.

In the carbon dioxide capture equipment according to this embodiment, it is also possible to prevent condensation of steam in the sorption step in which carbon dioxide is sorbed by the carbon dioxide sorbent 101.

As described above, according to this embodiment, a carbon dioxide capture equipment, with which the using amount of a regeneration gas to be allowed to flow in a carbon dioxide capture tower in a regeneration step of a carbon dioxide sorbent is reduced, and also the improving regeneration ratio of the carbon dioxide sorbent can be realized.

Second Embodiment

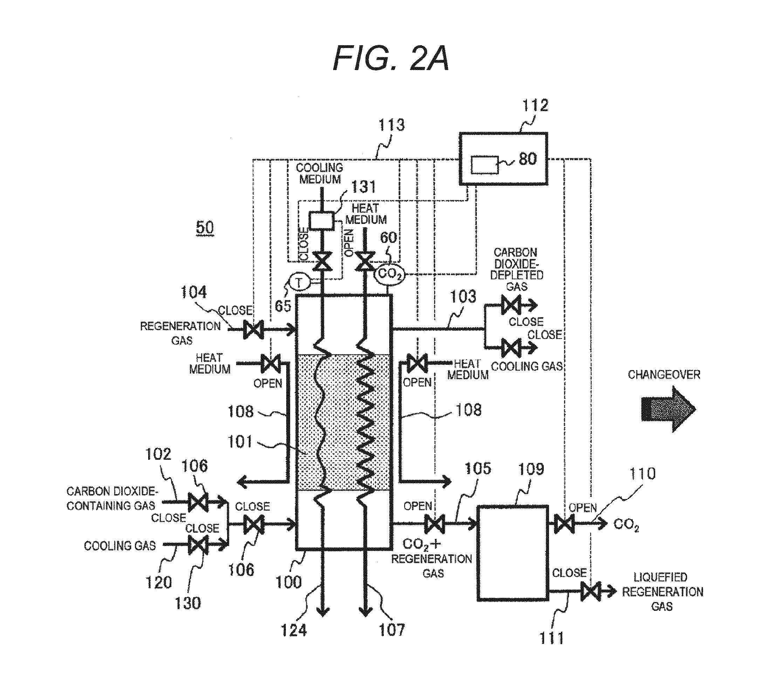

A carbon dioxide capture equipment 50 provided with a carbon dioxide capture tower 100 according to a second embodiment of the present invention will be described with reference to Figs. 2A to 2C.

Figs. 2A to 2C are each an overall block diagram of a carbon dioxide capture equipment 50 showing a regeneration step and a cooling step of a carbon dioxide sorbent 101 included in a carbon dioxide capture tower 100 in the carbon dioxide capture equipment according to the second embodiment of the present invention.

The basic structure of the carbon dioxide capture equipment according to this embodiment shown in Figs. 2A to 2C is the same as that of the carbon dioxide capture equipment according to the first embodiment shown in Figs. 1A to 1B, and therefore, the description of the structure common to both devices is omitted, and only different parts will be described below.

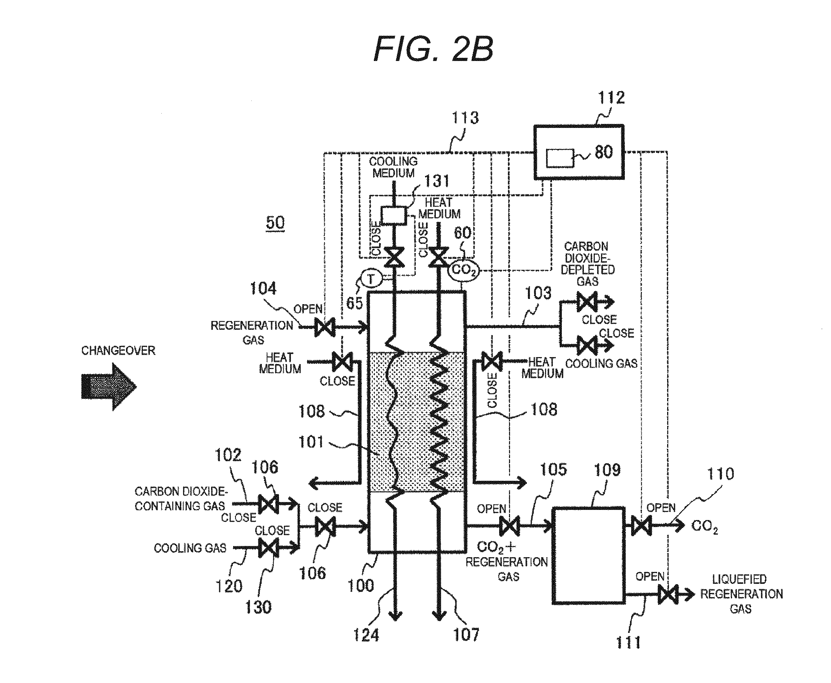

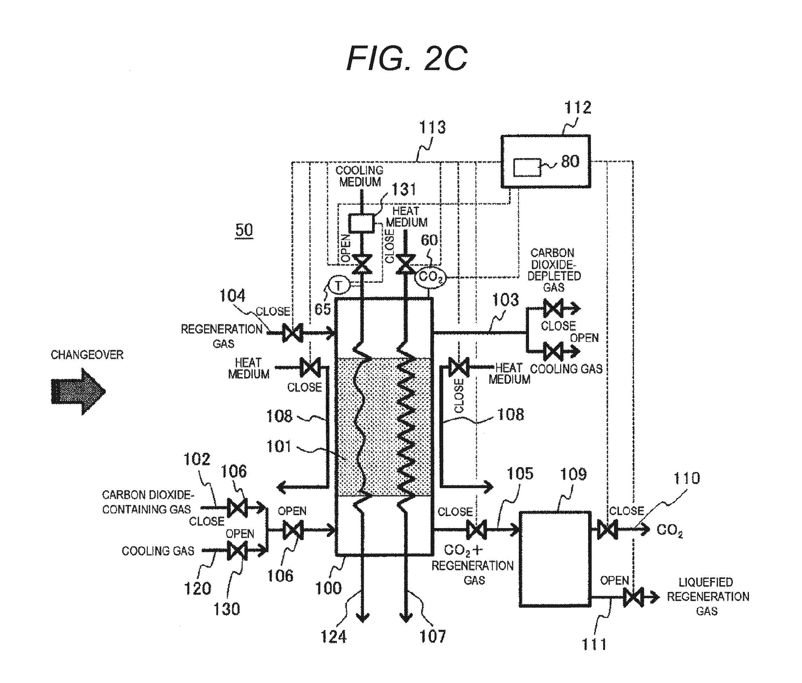

The carbon dioxide capture equipment according to this embodiment shown in Figs. 2A and 2B has a structure in which a cooling medium temperature control unit 131 for a cooling medium to be allowed to flow in a cooling step of a carbon dioxide sorbent 101 is disposed so that steam is not condensed on the surface of the carbon dioxide sorbent 101 in the cooling step of the carbon dioxide sorbent 101 shown in Fig. 2C.

The process up to the regeneration step of the carbon dioxide sorbent in the carbon dioxide capture equipment according to this embodiment shown in Figs. 2A and 2B proceeds in the same manner as the process up to the regeneration step of the carbon dioxide sorbent in the carbon dioxide capture equipment according to the first embodiment shown in Figs. 1A and 1B, however, in the carbon dioxide capture equipment according to this embodiment, as a pretreatment for performing a sorption step in which carbon dioxide is sorbed by the carbon dioxide sorbent 101, which is the subsequent step after regenerating the carbon dioxide sorbent 101, a cooling step shown in Fig. 2C in which the carbon dioxide sorbent 101 is cooled by cooling the carbon dioxide capture tower 100 is needed.

In this cooling step of the carbon dioxide sorbent 101 shown in Fig. 2C, the cooling medium is allowed to flow through a cooling medium channel 124 passing through the inside of the carbon dioxide capture tower 100. As the cooling medium to be used in the cooling step of the carbon dioxide sorbent 101, any medium may be used, however, it is preferred to use water since it is not toxic and is inexpensive.

In the case where the temperature of the cooling medium in the cooling step is lower than the temperature of the carbon dioxide-containing gas flowing in the sorption step, in which carbon dioxide is sorbed by the carbon dioxide sorbent 101, and which is performed after the cooling step of the carbon dioxide sorbent 101, the temperature of the carbon dioxide sorbent 101 when the sorption step is started turns out to be lower than the temperature of the carbon dioxide-containing gas.

As a result, steam in the carbon dioxide-containing gas may be condensed on the surface of the carbon dioxide sorbent 101 to inhibit sorption of the carbon dioxide.

Therefore, in the carbon dioxide capture equipment 50 according to this embodiment, in order to solve the above-described problem that steam in the carbon dioxide-containing gas is condensed on the surface of the carbon dioxide sorbent 101, as shown in Figs. 2A to 2C, the cooling meduim temperature control unit 131 is disposed, and a valve and a thermometer 65 are disposed in the cooling medium channel 124 on the inlet side of the carbon dioxide capture tower 100 so that the temperature of the cooling medium to be supplied to the cooling medium channel 124 arranged inside the carbon dioxide capture tower 100 is equal to or higher than the temperature of the carbon dioxide-containing gas. Based on the temperature detected by this thermometer 65, the flow amount of the cooling medium to be supplied to the cooling medium channel 124 arranged inside the carbon dioxide capture tower 100 is calculated by the cooling medium temperature control unit 131, and an operation of opening and closing the valve is performed such that the flow amount of the cooling medium reaches the value calculated by the cooling medium temperature control unit 131, whereby the temperature of the cooling medium to be supplied to the cooling medium channel 124 arranged inside the carbon dioxide capture tower 100 is controlled to be equal to or higher than the temperature of the carbon dioxide-containing gas.

As a result, condensation of steam on the surface of the carbon dioxide sorbent 101 in the sorption step by the carbon dioxide sorbent 101 can be prevented, and thus, a decrease in the sorption efficiency of the carbon dioxide sorbent 101 can be prevented.

As the carbon dioxide sorbent 101 to be packed in the carbon dioxide capture tower 100 provided in the carbon dioxide capture equipment according to this embodiment, for example, a material having a high-specific surface area including silica, alumina, titania, zirconia, ceria, zeolite, a polymeric material, active carbon, MOF (Molecular Organic Framework), or ZIF (Zeolitic Imidazolate Framework) may be used, and also a material including an oxide or a carbonate of an alkali metal or an alkaline earth metal, or the like may be used. The shape of the carbon dioxide sorbent 101 may be any of a particle, a honeycomb, an air-permeable plate, and the like.

As described above, according to this embodiment, a carbon dioxide capture equipment, with which the using amount of a regeneration gas to be allowed to flow in a carbon dioxide capture tower in a regeneration step of a carbon dioxide sorbent is reduced, and also the improving regeneration ratio of the carbon dioxide sorbent can be realized.

Test Example of Comparative Example 1

Next, with respect to a test for regenerating a carbon dioxide sorbent packed in a carbon dioxide capture tower provided in a carbon dioxide capture equipment according to the embodiment of the present invention, a case where only a regeneration gas was supplied without performing heating in the regeneration step will be described as a test example of Comparative Example 1.

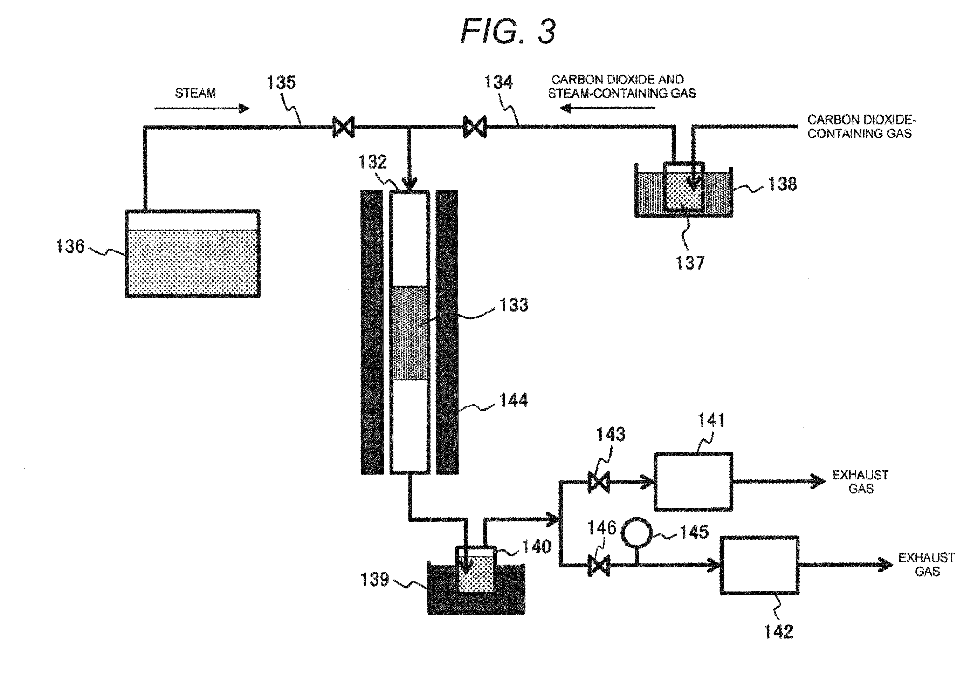

As Comparative Example 1, a test in which a carbon dioxide sorbent 133 made of the same material as that of the carbon dioxide sorbent 101 used and packed in the carbon dioxide capture tower 100 provided in the carbon dioxide capture equipment 50 according to the embodiment of the present invention is used, and the carbon dioxide sorbent 133 is regenerated by allowing saturated steam at 140°C to flow through the carbon dioxide sorbent 133 having reached the sorption equilibrium at 50°C under a carbon dioxide partial pressure of 13 kPa will be described using a regeneration test device for a carbon dioxide sorbent shown in Fig. 3.

As the carbon dioxide sorbent 133, ceria having a high specific surface area (HS) manufactured by Daiichi Kigenso Kagaku Kogyo Co., Ltd. was used. The carbon dioxide sorbent 133 molded into particles with a size of 0.5 to 1.0 mm was prepared in a volume of 16 $cm^3$ and packed in a reaction tube 132 with an inner diameter of about 1 cm, and the following test was performed.

Fig. 3 shows a schematic block diagram of the regeneration test device for the carbon dioxide sorbent used in this Comparative Example 1. In the regeneration test device for the carbon dioxide sorbent shown in Fig. 3, first, nitrogen is allowed to flow through the carbon dioxide sorbent 133 at 300°C for 2 hours to purge the carbon dioxide sorbent 133.

Subsequently, in order to make the carbon dioxide sorbent 133 to reach the sorption equilibrium in the sorption step, a carbon dioxide-containing gas is allowed to flow through a bubbling pot 137 in a thermoregulated bath 138 set at 50°C to form a carbon dioxide-containing gas containing steam, which is allowed to flow through the reaction tube 132 through a carbon dioxide and steam-containing gas channel 134 so that the carbon dioxide-containing gas containing steam is brought into contact with the carbon dioxide sorbent 133 packed in this reaction tube 132.

Further, the temperature of a heater 144 disposed on the outer peripheral side of the reaction tube 132 is set to 50°C for heating the reaction tube 132. The concentration of carbon dioxide in the outlet gas of the reaction tube 132 is measured by a carbon dioxide concentration meter 141 which is disposed on the downstream side of a steam capture water bath 140 after the gas is allowed to flow through the steam capture water bath 140 to remove steam. The steam capture water bath 140 is disposed on the downstream side of the reaction tube 132 and cooled by a cooling water bath 139 set at 10°C. The measured concentration of carbon dioxide is recorded by a flow amount measuring and recording unit 142.

At this time, a valve 143 disposed in a channel connected to the flow amount measuring and recording unit 142 from the steam capture water bath 140 is closed.

Then, at the time point when a sufficient time has passed since the concentration of carbon dioxide detected by the carbon dioxide concentration meter 141 showed the same concentration of carbon dioxide in the inlet gas of the reaction tube 132, the sorption step by the carbon dioxide sorbent 133 is completed, and the flow of the carbon dioxide-containing gas is stopped.

Next, the regeneration step of the carbon dioxide sorbent 133 will be described.

Simultaneously with the completion of the sorption step by the carbon dioxide sorbent 133, saturated steam at 140°C and 0.36 MPa (0.26 MPa as the gauge pressure) generated by a steam generator 136 is allowed to flow through the reaction tube 132 through a steam channel 135 from the steam generator 136.

At this time, the output of the heater 144 is turned off, the valve 143 disposed in a channel connected to the carbon dioxide concentration meter 141 from the reaction tube 132 through the steam capture water bath 140 is closed, and the valve 146 disposed in the channel connected to the flow amount measuring and recording unit 142 through the steam capture water bath 140 is opened.

Further, a pressure control valve 145 disposed on the upstream side of the flow amount measuring and recording unit 142 in the channel connected to the flow amount measuring and recording unit 142 through the steam capture water bath 140 is set to 0.36 MPa (0.26 MPa as the gauge pressure).

Carbon dioxide desorbed from the carbon dioxide sorbent 133 due to an increase in the temperature of the carbon dioxide sorbent 133 in the reaction tube 132 and the replacement of the gas in the reaction tube 132 with steam flows in the flow amount measuring and recording unit 142 from the reaction tube 132 through the steam capture water bath 140.

From the flow amount of the outlet gas on a dry basis (the flow amount of the outlet gas of the reaction tube 132), the desorption amount of carbon dioxide desorbed from the carbon dioxide sorbent 133 was calculated by adding up the measured flow amounts of carbon dioxide, and then, the regeneration ratio of the carbon dioxide sorbent was calculated according to the Formula 1.

$$(\text{Regeneration ratio}) = (\text{Desorption amount of carbon dioxide})$$
$$/\ (\text{Sorption amount of carbon dioxide}) \times 100 \qquad (\text{Formula 1})$$

As a result, the regeneration ratio of the carbon dioxide sorbent 133 with respect to the sorption amount of carbon dioxide when a pretreatment at 300°C (a treatment in which nitrogen was allowed to flow at 300°C for 2 hours) was performed was 41%. In the Formula 1, the sorption amount of carbon dioxide is the sorption amount of carbon dioxide when a carbon dioxide-containing gas at 50°C under a carbon dioxide partial pressure of 13 kPa was allowed to flow after nitrogen was allowed to flow at 300°C for 2 hours; and the desorption amount of carbon dioxide is the desorption amount of carbon dioxide when saturated steam at 140°C was allowed to flow for a sufficient time.

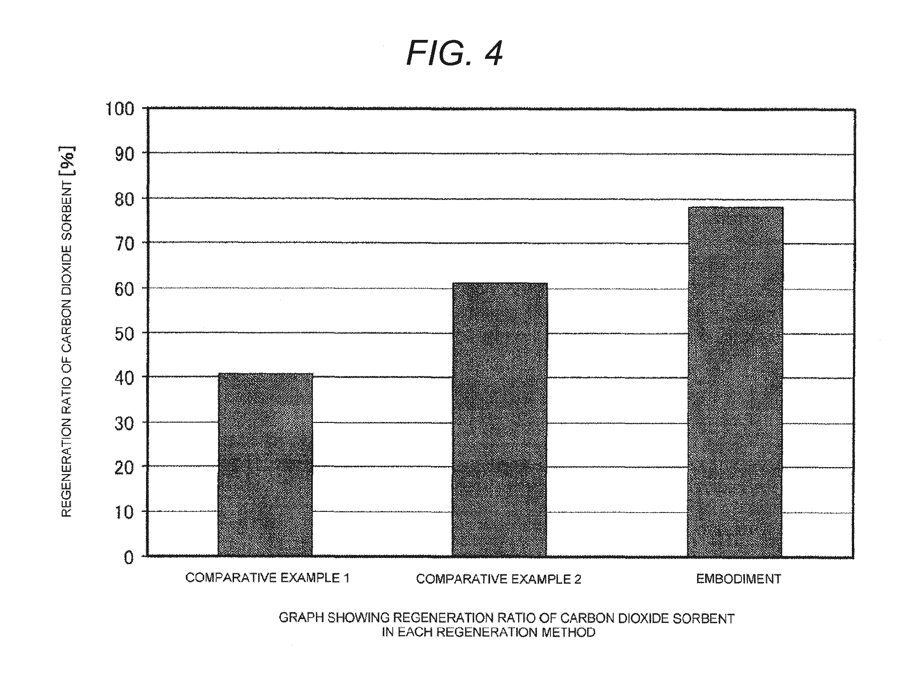

As a result, a regeneration ratio of only about 41% was obtained as the regeneration ratio of the carbon dioxide sorbent 133 as shown as Comparative Example 1 in the below-described Fig. 4 representing the regeneration ratio of a carbon dioxide sorbent.

Test Example of Comparative Example 2

Next, with respect to a test for regenerating a carbon dioxide sorbent packed in a carbon dioxide capture tower provided in a carbon dioxide capture equipment according to the embodiment of the present invention, a case where only heating of the carbon dioxide sorbent by supplying a heat medium was performed in the regeneration step will be described as a test example of Comparative Example 2.

As Comparative Example 2, a test in which a carbon dioxide sorbent 133 made of the same material as that of the carbon dioxide sorbent 101 used and packed in the carbon dioxide capture tower 100 provided in the carbon dioxide capture equipment 50 according to the embodiment of the present invention is used, and the carbon dioxide sorbent 133 is regenerated by heating the carbon dioxide sorbent 133 having reached the sorption equilibrium at 50°C under a carbon dioxide partial pressure of 13 kPa by a heater at 140°C will be described using a regeneration test device for a carbon dioxide sorbent shown in Fig. 3.

In the same manner as in Comparative Example 1, as the carbon dioxide sorbent 133, ceria having a high specific surface area (HS) manufactured by Daiichi Kigenso Kagaku Kogyo Co., Ltd. was used. The carbon dioxide sorbent 133 molded into particles with a size of 0.5 to 1.0 mm was prepared in a volume of 16 cm$^3$ and packed in a reaction tube 132 with an inner diameter of about 1 cm, and the following test was performed. The schematic block diagram of the regeneration test device used is the same as that in Comparative Example 1 and shown in Fig. 3.

Fig. 3 shows a schematic block diagram of the regeneration test device for the carbon dioxide sorbent used in this Comparative Example 2. In the regeneration test device for the carbon dioxide sorbent shown in Fig. 3, first, nitrogen is allowed to flow through the carbon dioxide sorbent 133 at 300°C for 2 hours to purge the carbon dioxide sorbent 133.

Subsequently, in order to make the carbon dioxide sorbent 133 to reach the sorption equilibrium in the sorption step, a carbon dioxide-containing gas is allowed to flow through a bubbling pot 137 in a thermoregulated bath 138 set at 50°C to form a carbon dioxide-containing gas containing steam, which is allowed to flow through the reaction tube 132 through a carbon dioxide and steam-containing gas channel 134 so that the carbon dioxide-containing gas containing steam is brought into contact with the carbon dioxide sorbent 133 packed in this reaction tube 132.

Further, the temperature of a heater 144 disposed on the outer peripheral side of the reaction tube 132 is set to 50°C for heating the reaction tube 132. The concentration of carbon dioxide in the outlet gas of the reaction tube 132 is measured by a carbon dioxide concentration meter 141 which is disposed on the downstream side of a steam capture water bath 140 after the gas is allowed to flow through the steam capture water bath 140 to remove steam. The steam capture water bath 140 is disposed on the downstream side of the reaction tube 132 and cooled by a cooling water bath 139 set at 10°C. The measured concentration of carbon dioxide is recorded by a flow amount measuring and recording unit 142.

At this time, a valve 143 disposed in a channel connected to the flow amount measuring and recording unit 142 from the steam capture water bath 140 is closed.

Then, at the time point when a sufficient time has passed since the concentration of carbon dioxide detected by the carbon dioxide concentration meter 141 showed the same concentration of carbon dioxide in the inlet gas of the reaction tube 132, the sorption step by the carbon dioxide sorbent 133 is completed, and the flow of the carbon dioxide-containing gas is stopped. The process up to this point is the same as in the case of Comparative Example 1.

Then, simultaneously with the completion of the sorption step by the carbon dioxide sorbent 133, a gas containing carbon dioxide and steam is supplied to the reaction tube 132 packed with the carbon dioxide sorbent 133 from the bubbling pot 137 in the thermoregulated bath 138 by opening a valve disposed in the carbon dioxide and steam-containing gas channel 134.

The valve 143 disposed in a channel connected from the reaction tube 132 to the carbon dioxide concentration meter 141 that measures the concentration of carbon dioxide in the outlet gas of the reaction tube 132 through the steam capture water bath 140 in the cooling water bath 139 is closed, and the valve 146 disposed in the channel connected to the flow amount measuring and recording unit 142 is opened.

Further, a pressure control valve 145 disposed on the upstream side of the flow amount measuring and recording unit 142 in the channel connected to the flow amount measuring and recording unit 142 through the steam capture water bath 140 is set to 0.10 MPa (0.00 MPa as the gauge pressure), and the temperature of the heater 144 disposed on the outer peripheral side of the reaction tube 132 is set to 140°C for heating the reaction tube 132.

Carbon dioxide desorbed from the carbon dioxide sorbent 133 due to an increase in the temperature of the carbon dioxide sorbent 133 in the reaction tube 132 flows in the flow amount measuring and recording unit 142 from the reaction tube 132 through the steam capture water bath 140. However, carbon dioxide is cooled to 10°C by flowing through this steam capture water bath 140, and thereafter, flows in the flow amount measuring and recording unit 142.

From the flow amount of the outlet gas of the reaction tube 132, the amount of carbon dioxide desorbed from the carbon dioxide sorbent 133 was calculated, and then, the regeneration ratio of the carbon dioxide sorbent 133 was calculated according to the above-described Formula 1 in the same manner as in Comparative Example 1.

As a result, the regeneration ratio of the carbon dioxide sorbent 133 with respect to the sorption amount of carbon dioxide when a pretreatment at 300°C was performed was 61% as shown as Comparative Example 2 in the below-described Fig. 4 representing the regeneration ratio of a carbon dioxide sorbent.

Test example of the present embodiment

Next, with respect to a test for regenerating a carbon dioxide sorbent packed in a carbon dioxide capture tower provided in a carbon dioxide capture equipment according to the embodiment of the present invention, a test in a case of a regeneration step, in which a heat medium was supplied to the carbon dioxide sorbent 133 to heat the carbon dioxide sorbent 133 in advance, and thereafter, a regeneration gas was supplied to the carbon dioxide sorbent 133 in the regeneration step, will be described as a test example of the present embodiment.

As the present embodiment for a test in which a carbon dioxide sorbent 133 made of the same material as that of the carbon dioxide sorbent 101 used and packed in the carbon dioxide capture tower 100 provided in the carbon dioxide capture equipment 50 according to the embodiment of the present invention is used, and the carbon dioxide sorbent 133 is regenerated, a regeneration test for a carbon dioxide sorbent, in which the carbon dioxide sorbent 133 which is used in the embodiment of the present invention and has reached the sorption equilibrium at 50°C under a carbon dioxide partial pressure of 13 kPa is heated by a heater at 140°C, and thereafter saturated steam at 140°C is allowed to flow therethrough, whereby the carbon dioxide sorbent is regenerated, will be described.

In the same manner as in Comparative Examples 1 and 2, as the carbon dioxide sorbent 133, ceria having a high specific surface area (HS) manufactured by Daiichi Kigenso Kagaku Kogyo Co., Ltd. was used in the test as this embodiment.

The carbon dioxide sorbent 133 molded into particles with a size of 0.5 to 1.0 mm was prepared in a volume of 16 cm$^3$ and packed in a reaction tube 132 with an inner diameter of about 1 cm, and the following test was performed. The schematic block diagram of the test device used as this embodiment is the same as that of the test device used in Comparative Examples 1 and 2, and the schematic block diagram of the used test device for the carbon dioxide sorbent 133 is shown in Fig. 3.

In this embodiment, in the test device for the carbon dioxide sorbent 133 shown in Fig. 3, first, nitrogen is allowed to flow through the carbon dioxide sorbent 133 at 300°C for 2 hours to purge the carbon dioxide sorbent 133.

Subsequently, in order to make the carbon dioxide sorbent 133 to reach the sorption equilibrium in the sorption step, a carbon dioxide-containing gas is allowed to flow through a bubbling pot 137 in a thermoregulated bath 138 set at 50°C to form a carbon dioxide-containing gas containing steam, which is allowed to flow through the reaction tube 132 so that the carbon dioxide-containing gas containing steam is brought into contact with the carbon dioxide sorbent 133.

Further, the temperature of a heater 144 is set to 50°C. The concentration of carbon dioxide in the outlet gas of the reaction tube 132 is measured by a carbon dioxide concentration meter 141 after the gas is allowed to flow through a steam capture water bath 140 cooled by a cooling water bath 139 set at 10°C to remove steam.

At this time, a valve 143 disposed in a channel connected to the flow amount measuring and recording unit 142 is closed. At the time point when a sufficient time has passed since the concentration of carbon dioxide detected by the carbon dioxide concentration meter 141 showed the same concentration of carbon dioxide in the inlet gas of the reaction tube 132, the sorption step is completed, and the flow of the carbon dioxide-containing gas is stopped. The process up to this point is the same as in the case of Comparative Examples 1 and 2.

Then, simultaneously with the completion of the sorption step, a valve in a carbon dioxide and steam-containing gas channel 134 and the valve 143 in a channel connected to the carbon dioxide concentration meter 141 are closed, and the valve 146 in a channel connected to the flow amount measuring and recording unit 142 is opened.

Further, a pressure control valve 145 is set to 0.10 MPa (0.00 MPa as the gauge pressure), and the temperature of the heater 144 is set to 140°C. Carbon dioxide desorbed due to an increase in the temperature of the carbon dioxide sorbent 133 in the reaction tube 132 is cooled to 10°C through the steam capture water bath 140 and thereafter, flows in the flow amount measuring and recording unit 142. The desorption amount of carbon dioxide (a) was calculated by adding up the flow amounts of the outlet gas at this time.

After the temperature of the carbon dioxide sorbent 133 is increased to 140°C, the pressure control valve 145 is set to 0.36 MPa (0.26 MPa as the gauge pressure), and saturated steam at 140°C and 0.36 MPa (0.26 MPa as the gauge pressure) prepared in advance by a steam generator 136 is allowed to flow through the reaction tube 132 through a steam channel 135.

At this time, the output of the heater 144 is turned off. The partial pressure of carbon dioxide in the reaction tube 132 is decreased by replacement with steam, and desorbed carbon dioxide flows in the flow amount measuring and recording unit 142 through the steam capture water bath 140.

The desorption amount of carbon dioxide (b) was calculated by adding up the flow amounts of the outlet gas at this time. The sum of the desorption amount of carbon dioxide (a) and the desorption amount of carbon dioxide (b) was determined as the desorption amount of carbon dioxide in the case of this embodiment. The regeneration ratio of the carbon dioxide sorbent was calculated according to the above-described Formula 1, and as a result, the regeneration ratio of the carbon dioxide sorbent with respect to the sorption amount of carbon dioxide when a pretreatment at 300°C was performed was 78% as shown as the embodiment in the below-described Fig. 4 representing the regeneration ratio of a carbon dioxide sorbent.

Fig. 4 shows the regeneration ratio of a carbon dioxide sorbent when a test for regenerating the carbon dioxide sorbent was performed in each of the cases of Comparative Example 1, Comparative Example 2, and the embodiment using the carbon dioxide sorbent 133 according to this embodiment.

According to the respective regeneration methods for the carbon dioxide sorbent 133 of Comparative Example 1, Comparative Example 2, and the embodiment, as apparent from the regeneration ratio of the carbon dioxide sorbent 133 shown in Fig. 4, in the case of the regeneration method for the carbon dioxide sorbent 133 of Comparative Example 1, the temperature of the carbon dioxide sorbent 133 was increased and the partial pressure of carbon dioxide in the reaction tube 132 was decreased, however, steam was condensed on the surface of the carbon dioxide sorbent 133, and the condensed water acted as a cover that inhibits the desorption of carbon dioxide, and therefore, the regeneration ratio of the carbon dioxide sorbent 133 was as low as 41% as shown in Fig. 4.

In the case of the regeneration method for the carbon dioxide sorbent 133 of Comparative Example 2, although steam was not condensed on the surface of the carbon dioxide sorbent 133, the partial pressure of carbon dioxide around the carbon dioxide sorbent 133 remained high, and therefore, the regeneration ratio of the carbon dioxide sorbent 133 was 61% as shown in Fig. 4, which is lower than in the case of the below-described regeneration method for the carbon dioxide sorbent 133 of the embodiment.

On the other hand, in the case of the regeneration method for the carbon dioxide sorbent 133 of the present embodiment, the condensation of steam on the surface of the carbon dioxide sorbent 133 can be prevented by heating the carbon dioxide sorbent 133 in advance, and thereafter supplying the regeneration gas to the carbon dioxide sorbent 133, and further, the partial pressure of carbon dioxide around the carbon dioxide sorbent 133 can be decreased by steam, and therefore, as shown as the embodiment in Fig. 4, the regeneration ratio of the carbon dioxide sorbent 133 was 78%. Even in comparison with each of the cases of the regeneration methods for the carbon dioxide sorbent 133 of Comparative Examples 1 and 2, a high regeneration ratio of 78% can be obtained as the regeneration ratio of the carbon dioxide sorbent 133 of the embodiment as shown in Fig. 4.

From the above results, it is considered that in the regeneration method for the carbon dioxide sorbent to be used in the carbon dioxide capture equipment shown as the embodiment, a method in which the carbon dioxide sorbent 133 is heated in advance, and thereafter the environment of the carbon dioxide sorbent 133 is purged with the regeneration gas is excellent from the viewpoint of the regeneration ratio of the carbon dioxide sorbent.

Further, the regeneration method of this embodiment is also excellent in that saturated steam can be used as the regeneration gas.

According to the regeneration method for the carbon dioxide sorbent 133 of this embodiment, the amount of steam to be allowed to flow through the reaction tube 132 can be decreased as compared with the regeneration method for the carbon dioxide sorbent 133 of Comparative Example 1, and as a result, the heat amount for condensation, which becomes a loss when carbon dioxide and steam are subjected to gas-liquid separation, can be decreased, and thus, this method is also excellent in that the operating cost can be decreased.

As described above, according to this embodiment, a carbon dioxide capture equipment, with which the using amount of a regeneration gas to be allowed to flow in a carbon dioxide capture tower in a regeneration step of a carbon dioxide sorbent is reduced, and also the regeneration ratio of the carbon dioxide sorbent is improved can be realized.

Third Embodiment

Next, a regeneration step of a carbon dioxide sorbent 101 in a carbon dioxide capture equipment 50 provided with a carbon dioxide capture tower 100 according to a third embodiment of the present invention will be described in detail with reference to Figs. 1A and 1B used for illustrating the first embodiment having the same basic structure as this embodiment.

The basic structure of the carbon dioxide capture equipment according to the third embodiment is the same as that of the carbon dioxide capture equipment according to the first embodiment shown in Figs. 1A to 1B, and therefore, the description of the structure common to both devices is omitted, and only different parts will be described below.

The carbon dioxide capture equipment according to the third embodiment performs a regeneration step of a carbon dioxide sorbent, in which the carbon dioxide sorbent 101 packed in the carbon dioxide capture tower 100 in the carbon dioxide capture equipment 50 and having carbon dioxide selectively sorbed from a carbon dioxide-containing gas is regenerated, in the same manner as the carbon dioxide capture equipment 50 according to the first embodiment shown in Figs. 1A and 1B.

In the carbon dioxide capture equipment 50 according to the third embodiment, the regeneration step of the carbon dioxide sorbent 101 by the carbon dioxide capture equipment according to this embodiment provided with a control device 112 which controls the flow amount of a regeneration gas to be allowed to flow through the carbon dioxide capture tower 100 from the outside through a regeneration gas channel 104 for regenerating the carbon dioxide sorbent 101 when it is detected that the temperature of the carbon dioxide sorbent 101 at a measurement point in the carbon dioxide capture tower 100 has reached a temperature higher than the temperature of the regeneration gas for regenerating the carbon dioxide sorbent 101 by heating the carbon dioxide sorbent 101 packed in the carbon dioxide capture tower 100 will be described with reference to Figs. 1A and 1B in the same manner as in the case of the carbon dioxide capture equipment according to the first embodiment.

In the carbon dioxide capture equipment 50 according to the third embodiment, a case where steam is used as the regeneration gas to be allowed to flow through the carbon dioxide capture tower 100 from the outside through the regeneration gas channel 104 for regenerating the carbon dioxide sorbent 101 will be described.

In the carbon dioxide capture equipment 50 according to the third embodiment having the same structure as that in the embodiment shown in Figs. 1A and 1B, the carbon dioxide capture tower 100 includes the carbon dioxide sorbent 101.

In a carbon dioxide sorption step in which carbon dioxide is selectively sorbed by the carbon dioxide sorbent 101 packed in the carbon dioxide capture tower 100 from a carbon dioxide-containing gas supplied to the carbon dioxide capture tower 100 through a carbon dioxide-containing gas channel 102, the carbon dioxide-containing gas flows in the carbon dioxide capture tower 100 through the carbon dioxide-containing gas channel 102, and carbon dioxide in the carbon dioxide-containing gas is selectively sorbed by the carbon dioxide sorbent 101 in the carbon dioxide capture tower 100.

Then, a gas depleted of carbon dioxide by selectively sorbing carbon dioxide with the carbon dioxide sorbent 101 is discharged to the outside from the carbon dioxide capture tower 100 through a carbon dioxide-depleted gas capture channel 103.

In the carbon dioxide capture tower 100, a carbon dioxide concentration meter 60 is disposed, and the control device 112 which closes the flow through the carbon dioxide-containing gas channel 102 and the carbon dioxide-depleted gas capture channel 103 by performing an operation of opening and closing valves disposed in the carbon dioxide-containing gas channel 102 and the carbon dioxide-depleted gas capture channel 103 to close the valves when the concentration of carbon dioxide in the carbon dioxide capture tower 100 detected by this carbon dioxide concentration meter 60 has exceeded a set amount, or when a set time has passed since the regeneration gas is allowed to flow in the carbon dioxide capture tower 100 through the regeneration gas channel 104 is disposed.

Next, in the carbon dioxide capture equipment 50 according to the third embodiment, the regeneration step of the carbon dioxide sorbent 101 in which the carbon dioxide sorbent 101 included in the carbon dioxide capture tower 100 is regenerated will be described.

Fig. 1A shows the opened and closed states of valves in a process of heating the carbon dioxide sorbent 101 for regenerating the carbon dioxide sorbent 101 included in the carbon dioxide capture tower 100.

In order to desorb and then capture carbon dioxide selectively sorbed from the carbon dioxide-containing gas by the carbon dioxide sorbent 101 included in the carbon dioxide capture tower 100 from the carbon dioxide sorbent 101, a valve disposed in a carbon dioxide and regeneration gas capture channel 105 through which carbon dioxide and a regeneration gas are supplied to a regeneration gas condenser 109 from the carbon dioxide capture tower 100, and a valve disposed in a carbon dioxide capture channel 110 through which carbon dioxide is discharged to the outside from the regeneration gas condenser 109 are opened, and also a valve disposed in a heat medium channel 107 passing through the inside of the carbon dioxide capture tower 100 and a valve disposed in a heat medium channel 108 passing through the outside of the carbon dioxide capture tower 100 are opened to allow a heat medium to flow down through each of the heat medium channels 107 and 108 by the control operation of the control device 112, whereby the carbon dioxide sorbent 101 included in the carbon dioxide capture tower 100 is heated.

Carbon dioxide desorbed from the carbon dioxide sorbent 101 by this heating of the carbon dioxide sorbent 101 is introduced into the regeneration gas condenser 109 from the carbon dioxide capture tower 100 through the carbon dioxide and regeneration gas capture channel 105, and further, discharged to the outside from the regeneration gas condenser 109 through the carbon dioxide capture channel 110, and then, captured by a capture device (not shown) on the downstream side of the regeneration gas condenser 109 by the operation of opening and closing the valves by the control device 112.

After a set time has passed since the heating of the carbon dioxide sorbent 101 included in the carbon dioxide capture tower 100 is started by allowing the heat medium to flow down through the heat medium channels 107 and 108 arranged inside and outside, respectively, the carbon dioxide capture tower 100, or after the temperature of the carbon dioxide sorbent 101 at the measurement point has reached a temperature higher than the temperature of the regeneration gas, as shown in Fig. 1B, by the operation of opening and closing the valves by the control device 112, the regeneration gas is allowed to flow in the carbon dioxide capture tower 100 through the regeneration gas channel 104.

The flow of the heat medium through the heat medium channel 107 passing through the inside of the carbon dioxide capture tower 100 and the heat medium channel 108 passing through the outside of the carbon dioxide capture tower 100 may be closed or may not be closed.

As shown in Fig. 1B, the opened and closed states of the valves in the carbon dioxide capture equipment 50 provided with the carbon dioxide capture tower 100 in the case where the flow of the heat medium which is allowed to flow down through the heat medium channels 107 and 108 disposed inside and outside, respectively, the carbon dioxide capture tower 100 is closed and also the flow of the regeneration gas in the carbon dioxide capture tower 100 through the regeneration gas channel 104 is started by the operation of opening and closing the valves by the control device 112 are shown.

By operating the valves by the control device 112 so as to bring the valves to an opened or closed state as shown in Fig. 1B, the partial pressure of carbon dioxide around the carbon dioxide sorbent 101 included in the carbon dioxide capture tower 100 is decreased to promote the desorption of carbon dioxide to be desorbed from the carbon dioxide sorbent 101, whereby the regeneration ratio of the carbon dioxide sorbent 101 is improved.

In the carbon dioxide capture equipment 50 according to the third embodiment described above, the regeneration step in which the carbon dioxide sorbent 101 included in the carbon dioxide capture tower 100 provided in the carbon dioxide capture equipment 50 is regenerated will be described.

As compared with the regeneration method in which the carbon dioxide sorbent 101 is regenerated by allowing steam as the regeneration gas for regenerating the carbon dioxide sorbent 101 to flow therethrough without heating the carbon dioxide sorbent 101 as shown in the above-described Comparative Example 1, in the regeneration step in which the carbon dioxide sorbent is regenerated in the carbon dioxide capture equipment according to this embodiment as described above, the condensation of steam on the surface of the carbon dioxide sorbent 101 can be prevented, and therefore, the regeneration ratio of the carbon dioxide sorbent 101 can be improved.

Further, this embodiment has an advantage in that the percentage of steam as the regeneration gas to be allowed to flow in the regeneration gas condenser 109 through the carbon dioxide and regeneration gas capture channel 105 from the carbon dioxide capture tower 100 can be reduced when regenerating the carbon dioxide sorbent 101, and the loss of heat amount for condensing steam can be reduced.

As compared with the regeneration method in which the carbon dioxide sorbent 101 is regenerated only by heating the carbon dioxide sorbent 101 without allowing steam serving as the regeneration gas to flow therethrough as shown in the above-described Comparative Example 2, in the regeneration step in which the carbon dioxide sorbent 101 is regenerated in the carbon dioxide capture equipment according to the third embodiment, the partial pressure of carbon dioxide around the carbon dioxide sorbent 101 can be decreased by allowing steam serving as the regeneration gas to flow therethrough to promote the desorption of carbon dioxide from the carbon dioxide sorbent 101, whereby the regeneration ratio of the carbon dioxide sorbent 101 can be improved.

As described above, according to this embodiment, a carbon dioxide capture equipment, with which the using amount of a regeneration gas to be allowed to flow in a carbon dioxide capture tower in a regeneration step of a carbon dioxide sorbent is reduced, and also the improving regeneration ratio of the carbon dioxide sorbent can be realized.

Fourth Embodiment

Next, a regeneration step of a carbon dioxide sorbent 101 in a carbon dioxide capture equipment 50 provided with a carbon dioxide capture tower 100 according to a fourth embodiment of the present invention will be described in detail with reference to Figs. 2A to 2C used for illustrating the second embodiment having the same basic structure as this embodiment.

The basic structure of the carbon dioxide capture equipment according to the fourth embodiment is the same as that of the carbon dioxide capture equipment according to the second embodiment shown in Figs. 2A to 2C, and therefore, the description of the structure common to both devices is omitted, and only different parts will be described below.

The carbon dioxide capture equipment according to the fourth embodiment performs a regeneration step of a carbon dioxide sorbent, in which the carbon dioxide sorbent 101 packed in the carbon dioxide capture tower 100 in the carbon dioxide capture equipment 50 and having carbon dioxide selectively sorbed from a carbon dioxide-containing gas is regenerated, and also performs a cooling step thereafter in the same manner as the carbon dioxide capture equipment 50 according to the second embodiment shown in Figs. 2A to 2C.

Figs. 2A to 2C are each an overall block diagram of the carbon dioxide capture equipment 50 showing a regeneration step and a cooling step of the carbon dioxide sorbent 101 included in the carbon dioxide capture tower 100 in the carbon dioxide capture equipment according to the fourth embodiment of the present invention.

In the regeneration step of the carbon dioxide sorbent 101 and the cooling step of the carbon dioxide sorbent 101 in the carbon dioxide capture equipment 50 according to the fourth embodiment shown in Figs. 2A to 2C, in order to regenerate the carbon dioxide sorbent 101 with carbon dioxide selectively sorbed from a carbon dioxide-containing gas, after the carbon dioxide sorbent 101 packed in the carbon dioxide capture tower 100 is heated, the regeneration gas is allowed to flow through the carbon dioxide capture tower 100 packed with the carbon dioxide sorbent 101 and carbon dioxide is captured from the carbon dioxide sorbent 101. The process up to this point is the same as in the case of the carbon dioxide capture equipment according to the second embodiment.

Then, at the time of completion of the regeneration step in which the carbon dioxide sorbent 101 is regenerated, because of the heating of the carbon dioxide sorbent 101 in the regeneration step, the temperature of the carbon dioxide sorbent 101 becomes higher than when the sorption step is started. Due to this, if the carbon dioxide sorbent 101 is not cooled, the carbon dioxide sorbent 101 can hardly sorb carbon dioxide. Accordingly, the cooling step of the carbon dioxide sorbent 101 is needed.

In view of this, in the carbon dioxide capture equipment 50 according to the fourth embodiment, in the cooling step in which the carbon dioxide sorbent 101 is cooled shown in Fig. 2C, which is a step subsequent to the regeneration step in which the carbon dioxide sorbent 101 is regenerated, a cooling gas is introduced into the carbon dioxide capture tower 100 packed with the carbon dioxide sorbent 101 from the outside through a cooling gas channel 120, and the cooling gas after cooling the carbon dioxide sorbent 101 is discharged to the outside from the carbon dioxide capture tower 100 through a cooling gas outlet channel 121, and then the discharged cooling gas is captured.

Further, at the same time, as shown in Fig. 2C, in order to cool the carbon dioxide sorbent 101 packed in the carbon dioxide capture tower 100, a cooling medium and the cooling gas are allowed to flow down through the cooling medium channel 124 arranged inside the carbon dioxide capture tower 100, thereby cooling the carbon dioxide sorbent 101.

However, in the sorption step by the carbon dioxide sorbent 101 in which carbon dioxide is sorbed from a carbon dioxide-containing gas, which is a step subsequent to the cooling step in which the carbon dioxide sorbent 101 is cooled, in the case where steam is present in the carbon dioxide-containing gas, if the carbon dioxide sorbent 101 has a spot which is cooled to a temperature lower than the temperature of the carbon dioxide-containing gas, steam in the carbon dioxide-containing gas is condensed at the spot.

Thus, there is a concern that due to the condensation of steam in this carbon dioxide-containing gas, the sorption amount of carbon dioxide of the carbon dioxide sorbent 101 may be decreased.

In view of this, in the carbon dioxide capture equipment 50 according to the fourth embodiment, as shown in Fig. 2C, the cooling medium temperature control unit 131 for the cooling medium and the cooling gas is disposed in the carbon dioxide capture equipment 50 according to this embodiment, and also a valve and a thermometer 65 are disposed in the cooling medium channel 124 on the inlet side of the carbon dioxide capture tower 100 so that the temperature of the cooling medium and the cooling gas to be supplied to the cooling medium channel 124 arranged inside the carbon dioxide capture tower 100 is equal to or higher than the temperature of the carbon dioxide-containing gas.

Then, based on the temperature detected by this thermometer 65, the flow amount of the cooling medium to be supplied to the cooling medium channel 124 arranged inside the carbon dioxide capture tower 100 is calculated by the cooling medium temperature control unit 131, and an operation of opening and closing the valve is performed such that the flow amount of the cooling medium reaches the calculated value, whereby the temperature of the cooling medium and the cooling gas to be supplied to the cooling medium channel 124 arranged inside the carbon dioxide capture tower 100 is controlled to be equal to or higher than the temperature of the carbon dioxide-containing gas.

As a result, condensation of steam on the surface of the carbon dioxide sorbent 101 in the sorption step by the carbon dioxide sorbent 101 can be prevented, and thus, a decrease in the sorption efficiency of the carbon dioxide sorbent 101 can be prevented.

Further, since the decrease in sorption efficiency of the carbon dioxide sorbent 101 can be prevented, the carbon dioxide sorption efficiency is increased as compared with the case where the temperature control unit for the cooling medium and the cooling gas is not provided, and as a result, an excellent effect can be exhibited.

As described above, according to the present embodiment, a carbon dioxide capture equipment, with which the using amount of a regeneration gas to be allowed to flow in a carbon dioxide capture tower in a regeneration step of a carbon dioxide sorbent is reduced, and also the improving regeneration ratio of the carbon dioxide sorbent can be realized.

Reference Sings List

50: carbon dioxide capture equipment, 60: carbon dioxide concentration meter, 65,70: thermometer, 80: timer, 100: carbon dioxide capture tower, 101: carbon dioxide sorbent, 102: carbon dioxide-containing gas channel, 103: carbon dioxide-depleted gas capture channel, 104: regeneration gas channel, 105: regeneration gas capture channel, 107,108: heat medium channel, 109: regeneration gas condenser, 110: carbon dioxide capture channel, 112: control device, 113: , 120: cooling gas channel, 121: cooling gas outlet channel, 124: cooling medium channel, 131: cooling temperature control unit, 132: reaction tube, 133: carbon dioxide sorbent, 134: carbon dioxide and steam-containing gas channel, 135: team channel, 136: steam generator, 137: bubbling pot, 138: thermoregulated bath, 139: cooling water bath, 140: steam capture water bath, 141: carbon dioxide concentration meter, 142: flow amount measuring and recording unit, 143: valve, 144: heater, 145: pressure control valve.

**Claims**

1. A carbon dioxide capture equipment provided with a carbon dioxide capture tower including a carbon dioxide sorbent, comprising:

   a carbon dioxide-containing gas channel to supply a carbon dioxide-containing gas to the carbon dioxide sorbent included in the carbon dioxide capture tower;
   a carbon dioxide-depleted gas capture channel to capture a gas depleted of carbon dioxide from the carbon dioxide capture tower;

a regeneration gas channel to introduce a regeneration gas into the carbon dioxide sorbent included in the carbon dioxide capture tower;

a carbon dioxide and regeneration gas capture channel to capture a gas containing carbon dioxide and the regeneration gas from the carbon dioxide capture tower;

a carbon dioxide-regeneration gas separation unit to separate carbon dioxide and the regeneration gas by cooling the carbon dioxide and the regeneration gas captured from the carbon dioxide capture tower through the carbon dioxide and regeneration gas capture channel;

a carbon dioxide capture channel and a liquefied regeneration gas capture channel, each of which is connected to the carbon dioxide-regeneration gas separation unit, and to capture the carbon dioxide and the liquefied regeneration gas separated by the carbon dioxide-regeneration gas separation unit from the carbon dioxide-regeneration gas separation unit, respectively;

a heat medium channel to heat the carbon dioxide sorbent included in the carbon dioxide capture tower by supplying a heat medium to the carbon dioxide capture tower in a non-contact manner with the carbon dioxide sorbent;

a temperature detector to measure a temperature in the carbon dioxide capture tower, a carbon dioxide concentration detector to detect a carbon dioxide concentration in the carbon dioxide capture tower, or a timer for setting a time from when the supply of the heat medium to the carbon dioxide capture tower is started until when the temperature of the carbon dioxide sorbent is increased by heating to a predetermined temperature; and

a control device to control a flow amount of the heat source to be supplied to the carbon dioxide capture tower through the heat medium channel based on the temperature, the carbon dioxide concentration in the carbon dioxide capture tower detected by the temperature detector, the carbon dioxide concentration detector, or a command signal of the completion of the heating of the carbon dioxide sorbent output from the timer and also control a flow amount of the carbon dioxide-containing gas to be supplied to the carbon dioxide capture tower through the carbon dioxide-containing gas channel and a flow amount of the carbon dioxide-depleted gas to be captured from the carbon dioxide capture tower through the carbon dioxide-depleted gas capture channel in a regeneration step, in which the carbon dioxide sorbent included in the carbon dioxide capture tower is regenerated.

2. The carbon dioxide capture equipment according to claim 1, further comprising:

a cooling medium channel to cool the carbon dioxide sorbent included in the carbon dioxide capture tower by supplying a cooling medium to the carbon dioxide capture tower in a non-contact manner with the carbon dioxide sorbent;

a cooling medium temperature detector to measure a temperature of the cooling medium flowing down through the cooling medium channel; and

a cooling medium temperature controller to control a flow amount of the cooling medium to be supplied to the carbon dioxide capture tower through the cooling medium channel based on the temperature of the cooling medium flowing down through the cooling medium channel detected by the cooling medium temperature detector in a cooling step after completing a regeneration step, in which the carbon dioxide sorbent included in the carbon dioxide capture tower is regenerated.

3. The carbon dioxide capture equipment according to claim 1 or 2, wherein the heat medium channel, through which a heat source that heats the carbon dioxide sorbent included in the carbon dioxide capture tower is supplied in a non-contact manner with the carbon dioxide sorbent, is arranged both inside and outside the carbon dioxide capture tower or both inside the carbon dioxide capture tower and inside a wall of the carbon dioxide capture tower.

4. The carbon dioxide capture equipment according to claim 2 or 3, wherein the cooling medium channel, through which a cooling medium that cools the carbon dioxide sorbent included in the carbon dioxide capture tower is supplied in a non-contact manner with the carbon dioxide sorbent, is arranged both inside and outside the carbon dioxide capture tower or both inside the carbon dioxide capture tower and inside a wall of the carbon dioxide capture tower.

FIG. 1A

EP 2 781 249 A1

# FIG. 1B

# FIG. 2A

EP 2 781 249 A1

FIG. 2B

FIG. 2C

*FIG. 3*

## FIG. 4

GRAPH SHOWING REGENERATION RATIO OF CARBON DIOXIDE SORBENT
IN EACH REGENERATION METHOD

EP 2 781 249 A1

Europäisches
Patentamt
European
Patent Office
Office européen
des brevets

**EUROPEAN SEARCH REPORT**

Application Number

EP 14 15 8056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/282888 A1 (DECKMAN HARRY W [US] ET AL) 20 November 2008 (2008-11-20) | 1-4 | INV.<br>B01D53/04 |
| Y | * paragraphs [0002], [0017], [0069], [0075], [0078]; figures 9,10 * | 1-4 | |
| Y | EP 2 438 975 A1 (ASTRIUM GMBH [DE]) 11 April 2012 (2012-04-11)<br>* claims 1,3,5; figure 1 * | 1-4 | |
| Y | EP 2 111 905 A1 (AIR PROD & CHEM [US]) 28 October 2009 (2009-10-28)<br>* claims 2,3,6-8 * | 1-4 | |
| Y | US 5 876 488 A (BIRBARA PHILIP J [US] ET AL) 2 March 1999 (1999-03-02)<br>* column 5, line 56 - column 5, line 64 * | 1-4 | |

**TECHNICAL FIELDS SEARCHED (IPC)**

B01D

The present search report has been drawn up for all claims

| Place of search | Date of completion of the search | Examiner |
|---|---|---|
| Munich | 12 June 2014 | de Biasio, Arnaldo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 15 8056

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2014

| Patent document cited in search report | | Publication date | Patent family member(s) | | Publication date |
|---|---|---|---|---|---|
| US 2008282888 | A1 | 20-11-2008 | AU | 2008254516 A1 | 27-11-2008 |
| | | | AU | 2008254535 A1 | 27-11-2008 |
| | | | AU | 2008254961 A1 | 27-11-2008 |
| | | | CA | 2688545 A1 | 27-11-2008 |
| | | | CA | 2688636 A1 | 27-11-2008 |
| | | | CA | 2688638 A1 | 27-11-2008 |
| | | | EA | 200970976 A1 | 30-04-2010 |
| | | | EA | 200970978 A1 | 30-04-2010 |
| | | | EA | 200970979 A1 | 30-04-2010 |
| | | | EP | 2164600 A1 | 24-03-2010 |
| | | | EP | 2164602 A1 | 24-03-2010 |
| | | | EP | 2164603 A1 | 24-03-2010 |
| | | | JP | 5346926 B2 | 20-11-2013 |
| | | | JP | 5401447 B2 | 29-01-2014 |
| | | | JP | 2010527754 A | 19-08-2010 |
| | | | JP | 2010527756 A | 19-08-2010 |
| | | | JP | 2010527757 A | 19-08-2010 |
| | | | US | 2008282888 A1 | 20-11-2008 |
| | | | US | 2008314244 A1 | 25-12-2008 |
| | | | US | 2008314246 A1 | 25-12-2008 |
| | | | WO | 2008143964 A1 | 27-11-2008 |
| | | | WO | 2008143967 A1 | 27-11-2008 |
| | | | WO | 2008143968 A1 | 27-11-2008 |
| EP 2438975 | A1 | 11-04-2012 | CA | 2814035 A1 | 12-04-2012 |
| | | | EP | 2438975 A1 | 11-04-2012 |
| | | | US | 2014053724 A1 | 27-02-2014 |
| | | | WO | 2012045442 A1 | 12-04-2012 |
| EP 2111905 | A1 | 28-10-2009 | CN | 101564634 A | 28-10-2009 |
| | | | CN | 103785271 A | 14-05-2014 |
| | | | EP | 2111905 A1 | 28-10-2009 |
| | | | JP | 2009262151 A | 12-11-2009 |
| | | | RU | 2009115012 A | 27-10-2010 |
| | | | SG | 156587 A1 | 26-11-2009 |
| | | | TW | 200946206 A | 16-11-2009 |
| | | | US | 2009260518 A1 | 22-10-2009 |
| US 5876488 | A | 02-03-1999 | EP | 0892675 A1 | 27-01-1999 |
| | | | JP | 2000502289 A | 29-02-2000 |
| | | | US | 5876488 A | 02-03-1999 |
| | | | WO | 9817388 A1 | 30-04-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6091127 A

- JP 2006298707 A